# EUROPÄISCHE PATENTSCHRIFT

(11) **EP 0 896 210 B1**
(45) Veröffentlichungstag und Bekanntmachung des Hinweises auf die Patenterteilung: **05.12.2001**
(21) Anmeldenummer: 98109343.8
(22) Anmeldetag: 22.05.1998
(51) Int. Cl.: G01L 25/00, F15B 3/00

(54) **Hydraulikzylinder für eine Kraftmessmaschine**
Device with two arangements of hydraulic cylinders
Dispositif de deux ensembles avec vérin hydraulique

(30) Priorität: 24.05.1997 DE 19721725
(43) Veröffentlichungstag der Anmeldung: 10.02.1999
(73) Patentinhaber: Erichsen GmbH & Co. KG, 58675 Hemer (DE)
(72) Erfinder: Baethke, Klaus, Dipl.-Ing., 64405 Fischbachtal (DE)
(74) Vertreter: Dörner, Lothar, Dipl.-Ing.

(56) Entgegenhaltungen:
- DE-A- 3 138 170
- DE-A- 4 230 250

## Beschreibung

Die Erfindung betrifft Hydraulikzylinder für eine Kraftmeßmaschine, insbesondere eine Kraft-Normalmeßmaschine oder Werkstoffprüfmaschine, mit einem in einem Zylinder abgedichtet geführten Arbeitskolben.

Kraft-Normalmeßmaschinen, auch als Belastungsmaschinen bezeichnet, dienen zur Erzeugung von sehr genauen Kräften, die zur Kalibrierung von Kraft-Meßgeräten, insbesondere Kraftmeßdosen, eingesetzt werden.

Zur Erzeugung höherer Kräfte ist eine mechanische oder hydraulische Übersetzung der durch Meßgewichte eingeleiteten Kräfte erforderlich. Die hierfür eingesetzten Kraft-Normalmeßmaschinen bewirken diese Kraftübersetzung. Dabei wird die Einhaltung eines konstanten Übersetzungsverhältnisses mit sehr hoher Genauigkeit verlangt; insbesondere müssen störende Krafteinflüsse weitestgehend ausgeschaltet werden, weshalb auch nur minimale Reibung auftreten darf. Außerdem sollen die Anforderungen an Fertigung, Wartung und Ölversorgung nicht extrem sein.

Bei den für die Kalibrierung von Kraftmeßdosen höherer Nennlasten üblicherweise verwendeten hydraulischen Kraft-Normalmeßmaschinen ist der Arbeitskolben unter Einhaltung eines möglichst engen Dichtspaltes im Zylinder geführt. Das Übersetzungsverhältnis wird hierbei aber nicht allein durch die Kolbenstirnflächen der beiden hydraulisch miteinander verbundenen Zylinder der Kraft-Normalmeßmaschine bestimmt; vielmehr wird die wirksame Kolbenfläche durch das Strömungsprofil der sich im Dichtspalt zwischen dem Kolben und dem Zylinder einstellenden Leckströmung vergrößert. Auch die von der Leckströmung auf die Kolbenumfangsfläche ausgeübten hydraulischen Reibungskräfte verfälschen die Kraftübersetzung. Durch den kraftproportional veränderlichen Druck ändert sich die Spaltaufweitung.

Da das sich ergebende Übersetzungsverhältnis einer solchen hydraulischen Kraft-Normalmeßmaschine nicht ausreichend genau vorher bestimmbar ist, wird bei einer bekannten Kraft-Normalmeßmaschine (DE-PS 31 38 170) an der Stirnseite des Arbeitskolbens ein im Durchmesser wesentlich kleinerer Abgleichzapfen vorgesehen, der in einer auswechselbar im Arbeitszylinder angeordneten Buchse geführt ist. Dieser Abgleichzapfen und die Buchse können nachbearbeitet oder ausgewechselt werden, um das sich ergebende Übersetzungsverhältnis zu verändern, damit ein vorgegebenes Übersetzungsverhältnis erreicht wird. Da die Relativbewegungen zwischen dem Kolben und dem Zylinder sehr gering sind und beim stabilen Betriebszustand der Kraft-Normalmeßmaschine völlig entfallen, besteht die Gefahr, daß schon bei geringen Seitenkräften, vor allem bei einem Verkanten des Kolbens gegenüber dem Zylinder, der Flüssigkeitsfilm im Dichtspalt durchbrochen wird und es zu einer Berührung zwischen dem Kolben und dem Zylinder kommt.

Um eine solche Berührung auszuschließen und in allen Bereichen des Dichtspalts einen möglichst angenähert gleichen hydrodynamischen Schmierungszustand zu erhalten, ist es weiterhin bekannt, den Kolben durch einen Drehantrieb gegenüber dem Zylinder um die Zylinderachse zu drehen. Die übrigen, das wirksame Übersetzungsverhältnis bzw. die übertragenen Kräfte verfälschenden Einflüsse bleiben aber erhalten: Die wirksamen Kolbenflächen sind nicht genau bestimmbar, da ein Teil des Dichtspaltes und die ständige hydraulische Reibung des abfließenden Lecköls das Übersetzungsverhältnis bzw. die wirksame Kraft des Kolbens beeinflussen. Da bei den genannten Hydraulikzylindern ein Verkanten des Kolbens vermieden werden muß, erfolgt die Krafteinleitung üblicherweise über hydrostatische Lagerkalotten. Diese müssen aber mit einem ständigen Ölstrom versorgt werden, der erheblich zur Erwärmung des Zylinders beiträgt. Die gesamte Erwärmung des Zylinders bewirkt weitere Maßänderungen der Kolbenwirkfläche. Der Geräteaufwand für die ständig notwendige Ölzufuhr zum Zylinder und zu den Lagerkalotten ist erheblich; hierfür werden Pumpen, Servoventile, Filter und eine genaue regelbare Kühleinrichtung benötigt. Die Geräuschentwicklung der Pumpen und die unvermeidbare Ölnebelbildung wirken sich störend aus. Der Bauaufwand und der Wartungsaufwand sind beträchtlich.

Zur Vermeidung dieser Nachteile ist es bekannt (DE-OS 42 30 250), einen Hydraulikzylinder zu verwenden, bei dem der Zylinder einen am Arbeitskolben dichtend anliegenden, elastisch verformbaren Dichtring trägt, und von einem Drehantrieb für die Relativdrehung zwischen dem Arbeitskolben und dem Dichtring um die Zylinderachse angetrieben ist. Da die Abdichtung zwischen dem Dichtring und dem Arbeitskolben ohne einen Dichtspalt erfolgt, wird bei diesem Hydraulikzylinder die wirksame Kolbenfläche ausschließlich durch den Kolbendurchmesser bestimmt. Die an dem Dichtring auftretenden Reibungskräfte werden durch die Relativdrehung aufgenommen und beeinflussen die am Arbeitskolben übertragenen Axialkräfte nicht. Im Gegensatz zu einer Spaltdichtung besteht keine Notwendigkeit, auch die Zylinderinnenfläche mit hoher Genauigkeit und unter Einhaltung einer engen Toleranz zu bearbeiten. Es reicht vielmehr aus, die Kolbenumfangsfläche mit hoher Oberflächenfeinheit zu bearbeiten, beispielsweise durch Feinläppen, um eine sehr geringe Oberflächenrauhigkeit zu erreichen. Wegen der elastischen Verformbarkeit der Dichtringe ist in gewissem Maße auch eine Neigung des Kolbens gegenüber der Zylinderachse zulässig; deshalb kann auf Lagerkalotten verzichtet werden, so daß eine mögliche Erwärmung durch das für die Versorgung einer Lagerkalotte erforderliche Drucköl entfällt.

Der Nachteil des abgedichteten Einzelzylinders gegenüber einem Zylinder mit Dichtspalt ist die erhebliche größere Reibung der Dichtung durch die wirkende Anpresskraft des Drucköls. Diese Reibung führt zu einem Drehmoment, welches gegen den Prüfrahmen abgestützt werden muß. Diese Drehmomentstütze ist eine Reibungsquelle für die axiale Kraft des Zylindersystems.

Aufgabe der Erfindung ist es danach, einen Hydraulikzylinder der vorstehend genannten Art zu schaffen, der das nachteilige äußere Stützdrehmoment vermeidet. Diese Aufgabe wird erfindungsgemäß gelöst durch die Merkmale des Patentanspruchs 1.

Bei der "Parallel-Zylinder" oder "Hydraulikzylindersystem" benennbaren Ausführung des Hydraulikzylinders nach der Erfindung wird eine Kompensation der Stützdrehmomente erreicht. Dies geschieht insbesondere, wenn in Weiterbildung der Erfindung die Zylinder mit gegenläufiger Relativdrehung angetrieben sind. Die Notwendigkeit, die Drehmomente gegen den Prüfrahmen abzustützen, entfällt. Damit ist eine Reibungsquelle für die axiale Kraft des Zylindersystems ausgeschaltet. Die Vorteile des Hydraulikzylinders mit einem Zylinder, der einen Dichtring enthält und angetrieben ist, bleiben erhalten.

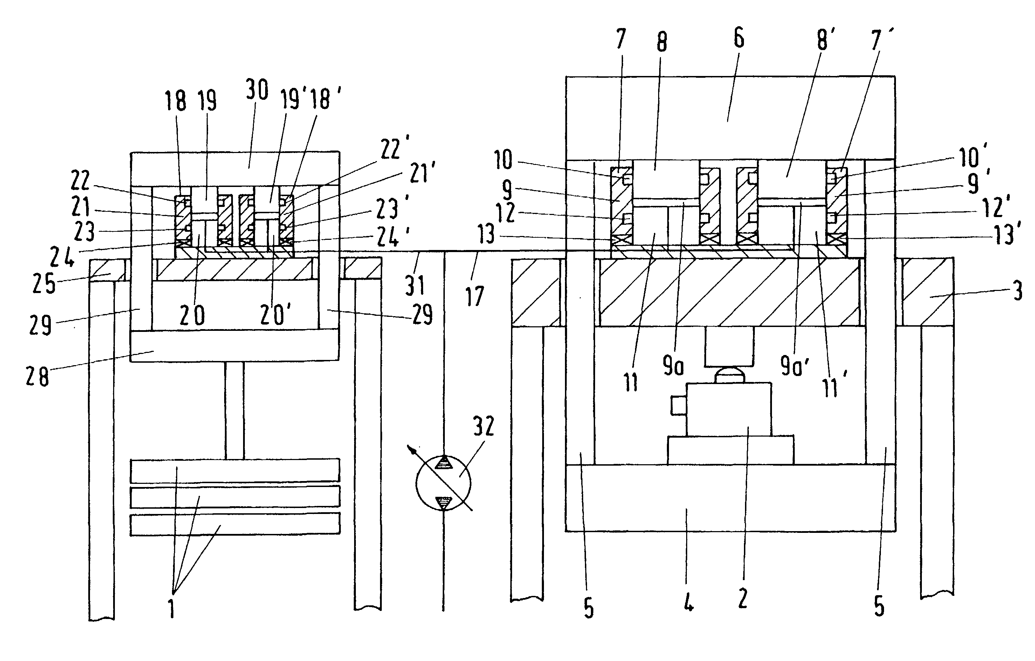

Ein Ausführungsbeispiel der Erfindung ist in der Zeichnung dargestellt und wird nachfolgend beschrieben. Die einzige Figur zeigt in vereinfachter Darstellung eine hydraulische Kraft-Normalmeßmaschine, deren Hydraulikzylinder jeweils im Schnitt dargestellt sind.

Die als Ausführungsbeispiel gewählte Kraft-Normalmeßmaschine dient dazu, eine von Meßgewichten 1 erzeugte Kraft in einem mit sehr hoher Genauigkeit vorgegebenen Übersetzungsverhältnis in eine wesentlich größere Kraft umzusetzen, die auf einen zu kalibrierenden Kraftaufnehmer 2 wirkt. Der Kraftaufnehmer 2 ist zwischen einem gestellfesten Träger 3 und einem unteren Joch 4 aufgenommen, das über Säulen 5 mit einem oberen Joch 6 zu einem geschlossenen Rahmen verbunden ist. Zwischen dem oberen Joch 6 der Kraft-Normalmeßmaschine und dem Träger 3 sind zwei Hydraulikzylinder 7, 7' parallel zueinander angeordnet, die die Arbeitszylinder der Kraft-Normalmeßmaschine bilden.

Zwei mit dem oberen Joch 6 verbundene Arbeitskolben 8, 8' ragen von oben in je einen Zylinderring 9, 9'. Jeder Zylinderring 9, 9' trägt einen ersten elastisch verformbaren Dichtring 10, 10', der mit seiner Dichtlippe an der Umfangsfläche des zugeordneten Arbeitskolbens 8, 8' dichtend anliegt. Jedem der beiden Hydraulikzylinder 7, 7' ist ein Führungskolben 11, 11' von gleichem Durchmesser wie der zugehörige Arbeitskolben 8, 8' zugeordnet, der entgegengesetzt zu diesem in den Innenraum des Zylinderrings 9,9' ragt. Jeder Zylinderring 9, 9' trägt in axialem Abstand zum ersten Dichtring 10, 10' einen zweiten elastisch verformbaren Dichtring 12, 12', der mit seiner Dichtlippe dichtend an der Umfangsfläche des Führungskolbens 11, 11' anliegt.

Der gestellfeste Träger 3 trägt sowohl die beiden Führungskolben 11, 11' als auch zwei Drehlager 13, 13', auf denen je einer der Zylinderringe 9, 9' drehbar gelagert ist, so daß er Drehbewegungen um die zugeordnete Zylinderachse ausführen kann. Als Drehantriebe dienen in der Zeichnung nicht dargestellte Motoren, von denen je einer einen der Zylinderringe 9, 9' antreibt. Der Antrieb der Zylinderringe 9, 9' erfolgt gegenläufig. Durch eine schematisch angedeutete Ölleitung 17, die durch den Träger 3 und die Führungskolben 11, 11' eintritt, wird jeweils der Innenraum 9a, 9'a des Hydraulikzylinders 7, 7' mit Drucköl versorgt. Die über die Arbeitskolben 8, 8', das obere Joch 6, die Säulen 5 und das untere Joch 4 auf die Kraftmeßdose 2 ausgeübte axiale Kraft wird ausschließlich durch den Durchmesser der Arbeitskolben 8, 8' und den hydraulischen Druck in den Innenräumen 9a, 9'a bestimmt. Die durch die Dichtkraft am ersten Dichtring 10, 10' auftretenden Reibungskräfte verlaufen entgegengesetzt zur Bewegungsrichtung und somit in Umfangsrichtung und beeinflussen daher die Axialkraft nicht. Die bei einer Einzylinder-Ausführung auftretende Reibung der Dichtung durch die wirkende Anpresskraft des Drucköls, die zu einem Drehmoment führt, welches gegen den Prüfrahmen abgestützt werden muß, tritt nicht auf wegen der erfindungsgemäß verwendeten zwei Hydraulikzylinder 7, 7'. Auch diese Reibungsquelle für die axiale Kraft des Zylindersystems ist vermieden.

Die Umsetzung der von den Meßgewichten 1 erzeugten Kraft in Öldruck in der Ölleitung 17 erfolgt in zwei kleineren Hydraulikzylindern 18, 18', von denen jeder einem der Hydraulikzylinder 7, 7' zugeordnet ist. Jeder kleine Hydraulikzylinder 18, 18' dient als Meßzylinder der Kraft-Normalmeßmaschine und hat im wesentlichen den gleichen konstruktiven Aufbau wie die beschriebenen Hydraulikzylinder 7, 7'. Auch untereinander sind die Hydraulikzylinder 18, 18' gleich aufgebaut. Auch bei den Hydraulikzylindern 18, 18' ragt je ein dem Arbeitskolben 8, 8' vergleichbarer Meßkolben 19, 19' von oben in einen der Hydraulikzylinder 18, 18', während je ein Führungskolben 20, 20' von unten in den Hydraulikzylinder 18, 18' ragt. Jedem aus einem der Meßkolben 19 bzw. 19' und einem der Führungskolben 20 bzw. 20' gebildeten Paar ist ein gemeinsamer Zylinderring 21, 21' zugeordnet. Jeder Zylinderring 21, 21' trägt einen ersten elastisch verformbaren Dichtring 22, 22', der dichtend an dem zugehörigen Kolben 19, 19' anliegt, und einen zweiten elastisch verformbaren Dichtring 23, 23', der dichtend an dem zugeordneten Führungskolben 20, 20' anliegt.

Die Führungskolben 20, 20' und die drehbaren Zylinderringe 21, 21' tragende Drehlager 24, 24' stützen sich an einem gemeinsamen gestellfesten Träger 25 ab. Für jeden kleinen Hydraulikzylinder 18, 18' ist ein nicht dargestellter Drehantrieb vorgesehen, der an einem der drehbaren Zylinderrings 21, 21' angreift. Der Umlauf auch der kleinen Hydraulikzylinder 18, 18' ist gegenläufig.

Die Meßgewichte 1 hängen über ein unteres Joch 28 und Säulen 29 an einem oberen Joch 30, das auf den Meßkolben 19, 19' ruht. Der Innenraum 21a, 21'a jedes Hydraulikzylinders 18, 18' ist über eine Druckleitung 31 mit der zum Hydraulikzylinder 7, 7' führenden Druckleitung 17 verbunden. Zum Volumenausgleich des hydrostatischen Systems mit Hydraulikzylinder 7, 7' und Meßzylinder 18, 18' dient eine Dosier-Ölpumpe 32, deren Ausgang mit der Druckleitung 17 verbunden ist. Die Pumpe 32 wird während des Betriebs auch dazu benutzt, das während eines jeden Lastwechsels benötigte Drucköl (Kompressibilitätsausgleich und von den mechanischen Verformungen der Rahmen herrührend) in das hydrostatische System zu liefern bzw. bei Entlastung herauszunehmen.

Die Dosierung kann sowohl servogeregelt als auch von Hand erfolgen. Während des Meßvorgangs kann die Öldosierung ausgeschaltet bleiben, es herrscht ein vollständig hydrostatischer Zustand in den durch die Leitung 17 miteinander verbundenen Zylindern 18, 18' und 7, 7'.

Abweichend von dem dargestellten Ausführungsbeispiel , bei dem der Arbeitskolben 8, 8' und der Führungskolben 11, 11' gleiche Durchmesser haben, kann der Durchmesser des Führungskolbens auch kleiner als der Durchmesser des Arbeitskolbens gewählt werden. Schon wenn der Führungskolben geringfügig kleiner als der Arbeitskolben ausgeführt wird und der Zylinderring 9, 9' nur eine kleine Stufe an seinem Innendurchmesser aufweist, genügt die Beaufschlagung dieser Stufe mit Drucköl, um den Zylinderring 9, 9' definiert gegen das Drehlager 13, 13' zu drücken. Statt dessen kann der Durchmesserunterschied auch wesentlich größer gewählt werden. Der untere Dichtring 12, 12', der am Führungskolben 11, 11' anliegt, kann dabei wesentlicher kleiner und einfacher ausgeführt werden oder sogar ganz entfallen.

Der Arbeitskolben 8, 8' kann drehbar angeordnet und über das Drehlager 13, 13' am gestellfesten Träger 3 abgestützt sein. Der obere Dichtring 10, 10' ist hierbei an dem am oberen Joch 6 festgelegten Zylinder 9, 9' angebracht und liegt dichtend an dem mit dem Drehantrieb verbundenen Arbeitskolben 8, 8' an.

Der Führungskolben 11, 11' kann abgedichtet in eine zentrische Zylinderbohrung des Arbeitskolbens 8, 8' ragen. Die Abdichtung erfolgt vorzugsweise über den Dichtring 12, 12'.

Abweichend von dem dargestellten Ausführungsbeispiel kann auch vorgesehen werden, nur den Dichtring zu einer Drehbewegung anzutreiben und sowohl den Arbeitskolben als auch den Zylinder undrehbar auszuführen.

Für alle Ausführungsformen gilt, daß die Drehbewegung auch in Form einer oszillierenden Drehbewegung erfolgen kann.

## Patentansprüche

1. Vorrichtung mit zwei Hydraulikzylinderanordnungen zur definierten Umformung einer Ausgangskraft in eine größere Endkraft, die insbesondere auf einen zu kalibrierenden Kraftaufnehmer (2) einwirken kann, bei der die Ausgangskraft die erste Hydraulikzylinderanordnung beaufschlagt, die über eine Druckölleitung (17) mit der zweiten Hydraulikzylinderanordnung verbunden ist, welche letztere zwei gleich aufgebaute und hydraulisch gekoppelte Zylinder (7, 7') enthält, von denen jeder einen abgedichtet geführten Arbeitskolben (8, 8') sowie einen vom Zylinder (7, 7') getragenen und am Arbeitskolben (8, 8') dichtend anliegenden, elastisch verformbaren Dichtring (10, 10') aufweist, und die mit einem Drehantrieb für eine Relativdrehung zwischen dem jeweiligen Arbeitskolben (8, 8') und dem jeweiligen Dichtring (10, 10') um die jeweilige Zylinderachse versehen ist, wobei die Zylinder (7, 7') mit gegenläufiger Relativdrehung angetrieben sind.

2. Vorrichtung nach Anspruch 1, wobei als Zylinder ein drehbar gelagerter, mit dem Drehantrieb in Antriebsverbindung stehender Zylinderring (9; 9') vorgesehen ist, von dem der am Arbeitskolben (8; 8') dichtend anliegende Dichtring (10; 10') getragen ist.

3. Vorrichtung nach Anspruch 2, wobei in jedem Zylinderring (9; 9') ein Führungskolben (11, 11') entgegengesetzt zum Arbeitskolben (8; 8') vorgesehen ist, und daß von dem Zylinderring (9; 9') ein zweiter elastisch verformbarer Dichtring (12; 12') getragen ist, der am Führungskolben (11; 11') dichtend anliegt.

4. Vorrichtung nach Anspruch 3, wobei die Arbeitskolben (8; 8') und die Führungskolben (11; 11') gleiche Durchmesser haben.

5. Vorrichtung nach Anspruch 3, wobei der Führungskolben (11; 11') und ein den Zylinderring (9; 9') tragendes Drehlager (13; 13') an einem gemeinsamen gestellfesten Träger (3; 25) abgestützt sind.

6. Vorrichtung nach Anspruch 1, wobei jeder Arbeitskolben (8, 8') drehbar angeordnet und über ein Drehlager (13, 13') gestellfest abgestützt ist, und daß jeder Führungskolben (11, 11') abgedichtet in eine zentrische Zylinderbohrung (8a, 8'a) des Arbeitskolbens (8, 8') ragt.

## Claims

1. Apparatus with two hydraulic cylinder arrangements for the defined transformation of an initial force into a larger final force, which can act in particular on a force transducer (2) to be calibrated, where the initial force acts on the first hydraulic cylinder arrangement, which is connected via a pressure-oil line (17) to the second hydraulic cylinder arrangement, which latter arrangement includes two identically constructed and hydraulically coupled cylinders (7, 7'), each of which has a working piston (8, 8') guided in a sealed manner and an elastically deformable sealing ring (10, 10'), carried by the cylinder (7, 7') and bearing sealingly against the working piston (8, 8'), and which is provided with a rotary drive for a relative rotation between the respective working piston (8, 8') and the respective sealing ring (10, 10') about the respective cylinder axis, the cylinders (7, 7') being driven with opposite relative rotation.

2. Apparatus according to Claim 1, the cylinder provided being a rotatably mounted cylinder ring (9; 9') which is in drive-connection with the rotary drive and carries the sealing ring (10; 10') bearing sealingly against the working piston (8; 8').

3. Apparatus according to Claim 2, a guiding piston (11, 11') being provided, opposite the working piston (8; 8'), in each cylinder ring (9; 9'), and the cylinder ring (9; 9') carrying a second elastically deformable sealing ring (12; 12'), which bears sealingly against the guiding piston (11; 11').

4. Apparatus according to Claim 3, the working pistons (8, 8') and the guiding pistons (11; 11') having equal diameters.

5. Apparatus according to Claim 3, the guiding piston (11; 11') and a rotary bearing (13; 13') carrying the cylinder ring (9; 9') being supported on a common beam (3; 25) fixed to the frame.

6. Apparatus according to Claim 1, each working piston (8, 8') being rotatably arranged and being supported, in a manner fixed to the frame, via a rotary bearing (13, 13'), and each guiding piston (11, 11') projecting in a sealed manner into a centric cylinder bore (8a, 8'a) of the working piston (8, 8').

## Revendications

1. Dispositif ayant deux agencements de vérins hydrauliques pour transformer de manière définie une force de départ en une force finale plus grande, qui, en particulier, peut agir sur un transducteur de force (2) à étalonner, dans lequel la force de départ agit sur le premier agencement de vérins hydrauliques qui communique avec le second agencement de vérins hydrauliques par une conduite d'huile sous pression (17), ce dernier comportant deux vérins (7, 7') construits à l'identique et couplés hydrauliquement, dont chacun présente un piston de travail (8, 8') guidé de manière étanche ainsi qu'une bague d'étanchéité (10, 10') déformable élastiquement portée par le vérin (7, 7') et s'appuyant de manière étanche contre le piston de travail (8, 8'), et qui est pourvu d'un entraînement rotatif pour une rotation relative entre chaque piston de travail (8, 8') et la bague d'étanchéité correspondante (10, 10') autour de l'axe de cylindre correspondant, les vérins (7, 7') étant entraînés dans une rotation relative contraire.

2. Dispositif selon la revendication 1, dans lequel il est prévu comme cylindre un anneau de cylindre (9; 9') monté tournant, en relation d'entraînement avec l'entraînement rotatif, lequel anneau de cylindre porte la bague d'étanchéité (10; 10') s'appuyant de manière étanche contre le piston de travail (8; 8').

3. Dispositif selon la revendication 2, dans lequel il est prévu dans chaque anneau de cylindre (9; 9') un piston de guidage (11, 11') à l'opposé du piston de travail (8; 8'), et que l'anneau de cylindre (9; 9') porte une seconde bague d'étanchéité (12; 12') déformable, qui s'appuie de manière étanche contre le piston de guidage (11; 11').

4. Dispositif selon la revendication 3, dans lequel les pistons de travail (8; 8') et les pistons de guidage (11; 11') ont le même diamètre.

5. Dispositif selon la revendication 3, dans lequel le piston de guidage (11; 11') et un palier rotatif (13; 13') portant l'anneau de cylindre (9; 9') sont appuyés contre un support fixe (3; 25) commun.

6. Dispositif selon la revendication 1, dans lequel chaque piston de travail (8, 8') est monté tournant et est appuyé fixement par l'intermédiaire d'un palier rotatif (13, 13') et que chaque piston de guidage (11, 11') dépasse de manière étanche dans un alésage de cylindre central (8a, 8'a) du piston de travail (8, 8').
